(19)

Europäisches
Patentamt
European
Patent Office
Office européen
des brevets

(11) **EP 2 219 092 B1**

(12) **EUROPEAN PATENT SPECIFICATION**

(45) Date of publication and mention
of the grant of the patent:
**07.09.2011 Bulletin 2011/36**

(21) Application number: **10152454.4**

(22) Date of filing: **02.02.2010**

(51) Int Cl.:
*G05D 1/02* (2006.01)   *G05B 13/04* (2006.01)
*B60W 10/18* (2006.01)   *B60W 30/18* (2006.01)
*B60W 40/06* (2006.01)   *B60W 50/08* (2006.01)

(54) **Method for controlling the speed of a vehicle**

Verfahren zum Regeln der Geschwindigkeit eines Fahrzeuges

Méthode de contrôle de la vitesse d'un véhicule

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.02.2009 IT TO20090070**

(43) Date of publication of application:
**18.08.2010 Bulletin 2010/33**

(73) Proprietor: **Magneti Marelli S.p.A.**
**Corbetta (MI) (IT)**

(72) Inventors:
• **Prodi, Giovanni**
**40137, BOLOGNA (IT)**

• **Angellotti, Serino**
**40134, BOLOGNA (IT)**
• **Nesci, Walter**
**40037, SASSO MARCONI (IT)**

(74) Representative: **Jorio, Paolo et al**
**STUDIO TORTA**
**Via Viotti 9**
**10121 Torino (IT)**

(56) References cited:
**EP-A- 1 302 356        EP-A- 1 475 265**
**DE-A1- 10 358 968      DE-B3-102005 045 891**
**US-A1- 2004 068 359    US-A1- 2007 192 012**

**Description**

TECHNICAL SECTOR

The present invention relates to a method for controlling the speed of a vehicle.

PRIOR ART

Each driver drives his own vehicle, principally following two objectives that are in contrast with one another: reducing to the minimum the travel time and reducing to the minimum fuel consumption (and hence, indirectly, the pollutants produced). Since these two objectives are mutually antithetic, the problem arises of approaching achievement of both by finding an optimal point of equilibrium.

The document No. US2004068359A1 describes a method for controlling the speed of a vehicle that envisages: determining a current stretch of a path of the vehicle; determining a recommended maximum speed for the current stretch of the path of the vehicle; and determining an optimal speed for the current stretch of the path of the vehicle as a function of the corresponding recommended maximum speed.

DESCRIPTION OF THE INVENTION

The aim of the present invention is to provide a method for controlling the speed of a vehicle, said the control method enabling an optimal balance to be obtained between the reduction of the travel time and the reduction of fuel consumption and, in particular, being easy to use even for a non-expert driver and being easy and economically advantageous to implement on an existing vehicle.

In accordance with the present invention, a method is provided for controlling the speed of a vehicle according to what is claimed in the annexed claims.

BRIEF DESCRIPTION OF THE DRAWINGS

The present invention will now be described with reference to the annexed drawings, which illustrate a non-limiting example of embodiment thereof and in which:

- Figure 1 is a schematic view of a vehicle that implements the speed-control method forming the subject of the present invention;
- Figure 2 is a graph that illustrates the correlation between speed and unit consumption of the vehicle of Figure 1;
- Figure 3 is a graph that illustrates the correlation between a recommended maximum speed and an ideal speed of the vehicle of Figure 1 as a coefficient of static saving that can be set by the driver varies;
- Figures 4 and 5 are two graphs that show the profile of the recommended maximum speed and of the optimal speed of the vehicle of Figure 1 along a testing path; and
- Figure 6 is a graph that shows the profile of the instantaneous speed and of the average speed of the vehicle of Figure 1 along a testing path.

PREFERRED EMBODIMENTS OF THE INVENTION

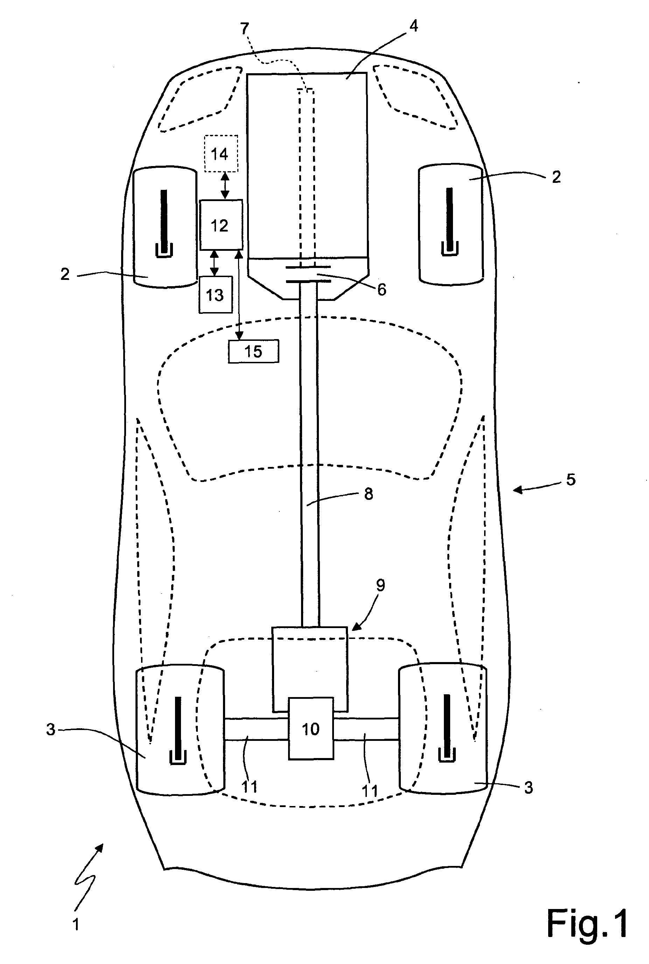

In Figure 1, designated as a whole by the number 1 is an automobile provided with two front wheels 2 and two rear driving wheels 3, which receive the torque generated by an internal-combustion engine 4 set in a front position by means of a servo transmission 5. The servo transmission 5 comprises a servo clutch 6, which is housed in a bell fixed with respect to the engine 4 and is designed to connect a crankshaft 7 of the engine 4 to a transmission shaft 8 terminating in a mechanical servo gearchange 9. Cascaded to the servo gearchange 9 is a differential 10, departing from which is a pair of axleshafts 11, each of which is fixed with respect to a respective rear driving wheel 2.

The automobile 1 comprises a control unit 12, which is able to control the speed of the automobile 1 both by acting on the generation of the torque by driving the engine 4 and by acting on the transmission of the torque by acting on the servo transmission 5. The control unit 12 is connected to a satellite navigator 13 (which can be integrated within the control unit 12 or can be separate from the control unit 12), which is designed to determine (or in any case at least foresee) both the path that must be covered by the automobile 1 and the current position and speed of the automobile 1 along the path itself. For each stretch of path, the satellite navigator 13 is able to supply the recommended maximum speed $V_{MAX}$ for the stretch of path itself, normally on the straight the recommended maximum speed $V_{MAX}$ for each stretch of path coinciding with the speed limit imposed by the highway code and coinciding with a lower value in the presence of bends, humps, crossroads, and other points that present difficulties and must be approached with caution.

According to a possible embodiment, the control unit 12 is connected to an acquisition device 14, which is able to "read" the road signals (including traffic lights) in front of the automobile 1 by means of a video camera and/or by means of a radio connection with radiotransmitters carried by the road signals themselves. In the case of a "speaking" traffic light, i.e., provided with a radiotransmitter, the radiotransmitter is able to supply both the state of the traffic light (green, yellow or red) and the time that remains before the traffic lights change. Furthermore, the acquisition device 14 could be able to receive via radio information supplied by information control units located, for example, in the proximity of road accidents or in areas with high traffic density (to supply, for example, the average speed of the queue) and information on the weather conditions (temperature, presence of rain, ice), etc.

According to a further embodiment, the control unit 12 can be connected to a system of video cameras and/or radars for identifying, in the path of the vehicle 1, the presence of other vehicles or of other objects and information on their speed. Said information is useful for modifying the speed of the vehicle 1 not only for reasons of safety, but also for slowing down and avoiding any need for jamming on the brakes (this behaviour is advantageous from the standpoint of fuel saving).

Set within the passenger compartment of the automobile 1 is an interface device 15, which enables the driver to interact with the control unit 12; in particular, by means of the interface device 15 the driver can read the current value and modify the current value by a coefficient $k_S$ of static saving, which is variable within a given range (typically between 0.2 and 2) and indicates to what extent the saving on the travel time must prevail over the energy saving during the phases at constant speed (i.e., in static conditions). Obviously, the interface device 15 can present to the driver the value of the coefficient $k_S$ of static saving in a different way from the effective numeric value; for example, the interface device 15 can present to the driver the value of the coefficient $k_S$ of static saving in percentage terms (for example 0% corresponds to the value 0.2, and 100% corresponds to the value 2, or vice versa). Likewise, by means of the interface device 15 the driver can read the current value and modify the current value by a coefficient $k_D$ of dynamic saving, which is variable within a given range and indicates to what extent the saving on the travel time must prevail over the energy saving during the phases at variable speed (i.e., in acceleration or in deceleration, that is, in dynamic conditions). According to a different embodiment, a single coefficient K of saving is envisaged, which is used both during phases at constant speed, and during phases at variable speed; in other words, the single coefficient K of saving replaces the coefficient $k_S$ of static saving, and the coefficient $k_D$ of dynamic saving being interpreted differently for stationary phases (characterized by constant speed) and for transitory or dynamic phases (characterized by accelerations or decelerations).

As initial hypothesis, it is established that the speed of the automobile 1 can never be higher than the recommended maximum speed $V_{MAX}$ supplied by the satellite navigator 13. Consequently, the control unit 12 determines each time the optimal speed $V_O$ of the automobile 1 that is comprised between zero (lower limit that is reached when it is necessary to stop the automobile 1, for example in front of a red traffic light) and the recommended maximum speed $V_{MAX}$. In other words, the mission of the control unit 12 is to determine for each stretch of the path of the automobile 1 what is the optimal speed $V_O$ (which is always lower than or, at the most, equal to the recommended maximum speed $V_{MAX}$). All other conditions being equal, a reduction of the speed of the automobile 1 generally enables a reduction of fuel consumption but at the same time entails an increase in the travel time. According to the wishes of the driver expressed by the coefficient $k_S$ of static saving (which indicates whether to privilege more the reduction of consumption or the reduction of the travel time) the control unit 12 must determine for each stretch of the path of the automobile 1 what is the optimal speed $V_O$, which represents the point of optimal equilibrium between the objective of reducing fuel consumption and the objective of reducing the travel time.

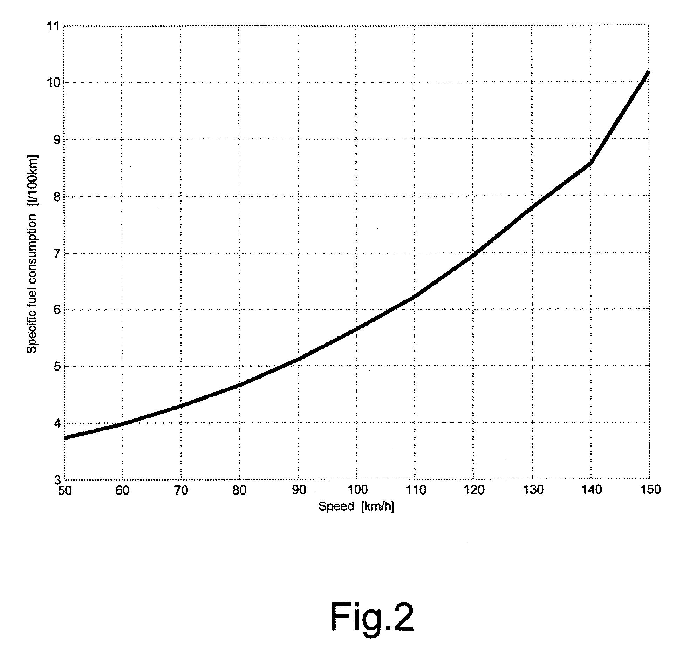

At a stage of design of the control unit 12, the fuel consumption of the automobile 1 is determined as the speed varies, and hence an experimental law is determined, which yields the fuel consumption of the automobile 1 as a function of the speed; by way of example, illustrated in the graph of Figure 2 is a real example of an experimental law that yields the fuel consumption of the automobile 1 as a function of the speed. In the definition of the law of Figure 2 the gear ratio 9 is chosen to optimize operation of the engine 4, i.e., generally to reduce as far as possible the r.p.m. of the engine 4 without jeopardizing proper operation of the engine 4 itself (i.e., to get the engine 4 to work in conditions of maximum efficiency). Illustrated in Figure 2 is the experimental law that yields the fuel consumption of the automobile 1 as a function of the speed in the case of zero slope; in general, said experimental law is parameterized as a function of the slope, which can be either positive (uphill, hence consumption penalized) or negative (downhill, hence consumption favoured).

In addition, in the stage of design of the control unit 12 a cost function $F_C$ is defined, which, given a certain recommended maximum speed $V_{MAX}$ and a speed V lower than the recommended maximum speed $V_{MAX}$, yields the overall "cost" of the reduction of the speed from the recommended maximum speed $V_{MAX}$ to the speed V and is calculated by adding algebraically to the percentage variation in consumption $\Delta C\%$ (which is in general negative) obtained as a result of the reduction of the speed the percentage variation of the travel time $\Delta T\%$ (which is always positive) obtained as a result of the reduction of the speed. Entered into the cost function $F_C$ is also the coefficient $k_S$ of static saving, which varies the weight of the percentage variation in consumption $\Delta C\%$ with respect to the percentage variation of the travel time $\Delta T\%$. According to a preferred embodiment, the coefficient $k_S$ of static saving is used as multiplicative coefficient of the percentage variation of the travel time. Hence, when the coefficient $k_S$ of static saving is lower than 1 it determines a greater weight of the fuel consumption with respect to the travel time; when the coefficient $k_S$ of static saving is equal to 1 it does not have any effect; and when the coefficient $k_S$ of static saving is higher than 1 it determines a smaller weight of the fuel consumption with respect to the travel time. Obviously, as an alternative the coefficient $k_S$ of static saving could be used as multiplicative coefficient of the percentage variation in consumption $\Delta C\%$, as quotient of the percentage variation of the travel time $\Delta T\%$, or else as quotient of the percentage variation in consumption $\Delta C\%$. In other words, the cost function $F_C$ is defined by the following equation:

$$F_C(V, V_{MAX}) = \Delta T\%(V, V_{MAX}) \cdot k_S + \Delta C\%(V, V_{MAX})$$

where:

$F_C$ is the cost function;
$V$ is the speed of the automobile 1;
$V_{MAX}$ is the recommended maximum speed of the automobile 1;
$\Delta T\%$ is the percentage variation of the travel time obtained
as a result of the reduction of the speed;
$k_S$ is the coefficient of static saving;
$\Delta C\%$ is the percentage variation in consumption obtained as a result of the reduction of the speed.

By rendering mathematically explicit the percentage variation in consumption $\Delta C\%$ and the percentage variation of the travel time $\Delta T\%$ the equation of the cost function $F_C$ becomes:

$$F_C(V, V_{MAX}) = \frac{T(V) - T(V_{MAX})}{T(V_{MAX})} \cdot k_S + \frac{C(V) - C(V_{MAX})}{C(V_{MAX})}$$

where:

$F_C$ is the cost function;
$V$ is the speed of the automobile 1;
$V_{MAX}$ is the recommended maximum speed of the automobile 1;
$T(V)$ is the function that yields the travel time of the automobile 1 at the speed V;
$k_S$ is the coefficient of static saving;
$C(V)$ is the function that yields the fuel consumption of the automobile 1 at the speed V.

Obviously, there exist many other possible mathematical expressions for defining the cost function $F_C$; for example, as an alternative to what has been described above, the cost function $F_C$ could be defined by the following equation:

$$F_C(V, V_{MAX}) = \Delta T\%(V, V_{MAX}) \cdot (1 - k_S) + \Delta C\%(V, V_{MAX}) \cdot k_S$$

where
$F_C$ is the cost function;
$V$ is the speed of the automobile 1;
$V_{MAX}$ is the recommended maximum speed of the automobile 1;
$\Delta T\%$ is the percentage variation of the travel time obtained as a result of the reduction of the speed;
$k_S$ is the coefficient of static saving comprised between 0 and 1;
$\Delta C\%$ is the percentage variation in consumption obtained as a result of the reduction of the speed.
By rendering mathematically explicit the percentage variation in consumption $\Delta C\%$ and the percentage variation of the travel time $\Delta T\%$, the equation of the cost function $F_C$ becomes:

$$F_C(V, V_{MAX}) = \frac{T(V) - T(V_{MAX})}{T(V_{MAX})} \cdot (1 - k_S) + \frac{C(V) - C(V_{MAX})}{C(V_{MAX})} \cdot k_S$$

where

$F_C$ is the cost function;

V is the speed of the automobile 1;

$V_{MAX}$ is the recommended maximum speed of the automobile 1;

T(V) is the function that yields the travel time of the automobile 1 at the speed V;

$k_S$ is the coefficient of static saving;

C(V) is the function that yields the fuel consumption of the automobile 1 at the speed V.

It should be emphasized that the functions T(V) and C(V) described above that yield the travel time and the fuel consumption of the automobile 1 at the speed V determine the travel time and the fuel consumption of the automobile 1 for covering a reference stretch of standard and predefined length (for example, 1 km or else 10 km or else 100 km). Given the length of the reference stretch and the speed of the automobile 1 the travel time is determined by means of a simple division; moreover, given the length of the reference stretch and the speed of the automobile 1, the unit consumption at this speed is determined by means of an experimental law of the type like the one illustrated in Figure 2, and hence fuel consumption is determined by means of a simple division. It should then be emphasized that the units of measurement with which the functions T(V) and C(V) are expressed have no importance given that the cost function $F_C$ is normalized and expressed in percentage terms.

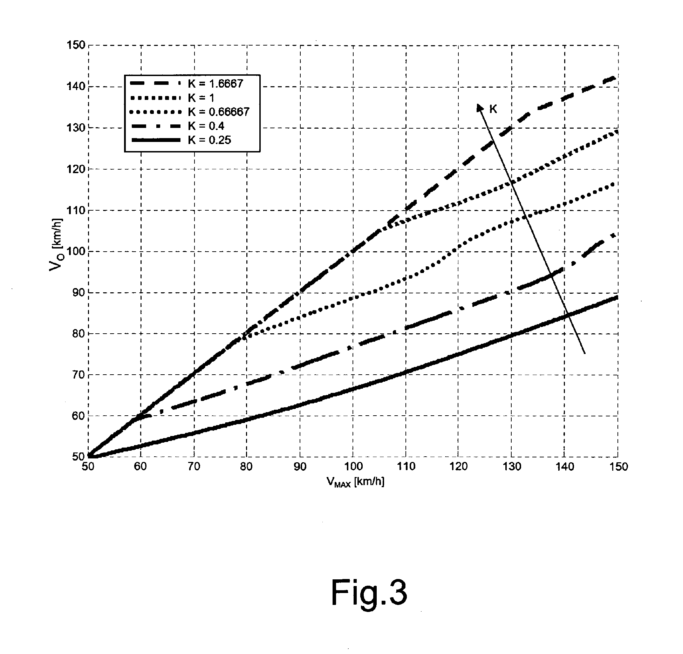

Once again in the stage of design of the control unit 12 for each recommended maximum speed $V_{MAX}$ and for each coefficient $k_S$ of static saving the corresponding optimal speed $V_O$ that enables minimization of the cost function $F_C$ is determined; in other words, given a recommended maximum speed $V_{MAX}$ and a coefficient $k_S$ of static saving, the corresponding optimal speed $V_O$ is the speed that yields the minimum absolute value of the cost function $F_C$. The determination of the optimal speeds $V_O$ is made by means of known mathematical techniques of determination of the minimum of a function (typically using numerical methodologies with the aid of a computer, in so far as the experimental law that yields the unit consumption as a function of the speed is not simply expressible with a mathematical function); obviously, there is always present the constraint that the optimal speed $V_O$ cannot be higher than the recommended maximum speed $V_{MAX}$. In other words, in the design stage of the control unit 12 a law is determined, which, as a function of the recommended maximum speed $V_{MAX}$ yields the optimal speed $V_O$ and is parameterized as a function of the coefficient $k_S$ of static saving; a real example of said law is graphically illustrated in Figure 3, where it appears immediately evident that given the same recommended maximum speed $V_{MAX}$ the optimal speed $V_O$ increases as the coefficient $k_S$ of static saving increases.

During normal use of the automobile 1, when the speed-control function is activated, the control unit 12 determines by means of the satellite navigator 13 the path of the automobile 1 and then determines the current stretch of path (i.e., the stretch of path in which the automobile 1 is located and is hence currently occupied by the automobile 1) and the recommended maximum speed $V_{MAX}$ for the current stretch; as a function of the recommended maximum speed $V_{MAX}$ for the current stretch and as a function of the coefficient $k_S$ of static saving selected by the driver, the control unit 12, using the law determined in the design stage, determines the corresponding optimal speed $V_O$ and then drives the engine 4 (and if necessary the gearchange 9) in a known way to get the automobile 1 to travel at the optimal speed $V_O$. Obviously, whenever the recommended maximum speed $V_{MAX}$ for the current stretch is modified, the control unit 12 updates the corresponding optimal speed $V_O$, as has been described above.

It should be emphasized that the amplitude of the stretches of the path is not uniform, but depends upon the context: on a motorway, the length of the stretches is much greater than on a local road that traverses built-up areas.

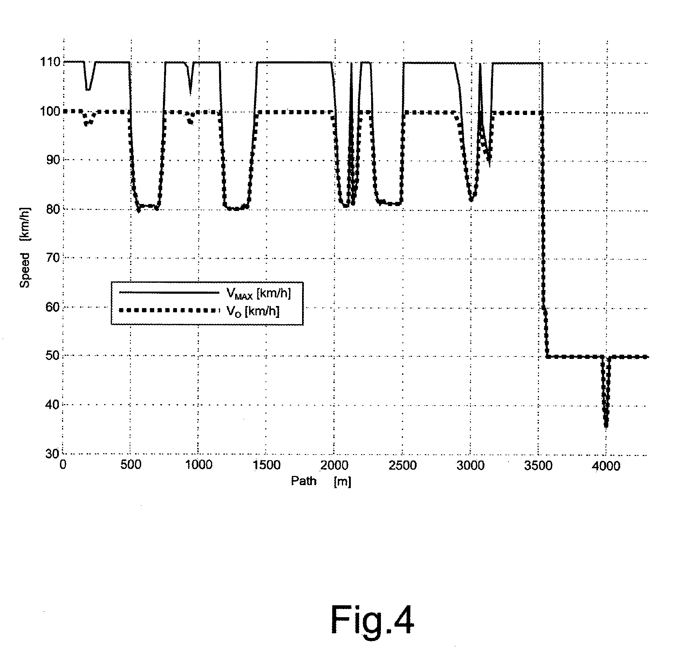

Figure 4 is a graphic illustration of a real example of a profile of the recommended maximum speed $V_{MAX}$ (solid line) and of the optimal speed $V_O$ (dashed line) of the automobile 1 along a testing path of approximately 4 km using a coefficient $k_S$ of static saving equal to 0.85 (hence a coefficient $k_S$ of static saving that favours slightly the reduction of fuel consumption over the reduction of the travel time).

What has been set forth above is valid in stationary or almost stationary conditions, in so far as it does not take into account the dynamics of the automobile 1; i.e., it does not take into account the kinetic energy possessed by the automobile 1, which in the case of braking is dissipated and which can be used for motion by inertia of the automobile 1. For example, knowing the path of the automobile 1, if at the end of a stretch covered at the speed of 100 km/h it is necessary to take a bend at the speed of 50 km/h, it is not advantageous from the fuel-consumption standpoint to arrive in the proximity of the bend at 100 km/h and then brake sharply; from the fuel-consumption standpoint, it is much more advantageous to determine a gradual approach to the bend, reducing the speed of the automobile 1 progressively from 100 km/h to 50 km/h on approaching the bend possibly without using the brakes, which always entails a dissipation of energy.

In other words, in the passage between two successive stretches presenting respective optimal speeds $V_O$ that are different from one another, it is necessary to envisage an adequate radiusing of the speed of the automobile 1 from the optimal speed $V_O$ for the current stretch to the optimal speed $V_O$ for the subsequent stretch. In practice, the navigator 13, knowing or estimating with an internal algorithm of its own the future path of the vehicle 1, is able to inform the control unit 12 of a certain number of future variations of the recommended maximum speed $V_{MAX}$ and hence of the optimal speeds $V_O$; the control unit 12 then has the task of deciding what is, if it exists, the point on which to calculate the profile of deceleration as a function of the current speed of the vehicle 1, of the future speed constraints, and of the respective distances of application.

The rule of adjustment of the speed envisages that, when the optimal speed $V_O$ for the current stretch is lower than the optimal speed $V_O$ for the subsequent stretch, the adjustment of the speed (i.e., the acceleration of the automobile 1) occurs entirely in the subsequent stretch; in other words, when the optimal speed $V_O$ for the current stretch is lower than the optimal speed $V_O$ for the subsequent stretch, the current stretch is entirely covered at its own optimal speed $V_O$ and in the initial part of the subsequent stretch a progressive acceleration is made to reach progressively the optimal speed $V_O$ for the subsequent stretch. Preferably, the acceleration is never violent in so far as during a violent acceleration the engine 4 works in conditions far from maximum efficiency. According to a preferred embodiment, the mean value of the acceleration during adjustment of the speed is variable as a function of the coefficient $k_D$ of dynamic saving so that the more the coefficient $k_D$ of dynamic saving favours the reduction of fuel consumption, the more the mean value of the acceleration is reduced.

Furthermore, the rule of adjustment of the speed envisages that, when the optimal speed $V_O$ for the current stretch is higher than the optimal speed $V_O$ for the subsequent stretch, the adjustment of the speed (i.e., the deceleration of the automobile 1) occurs entirely in the current stretch; in other words, when the optimal speed $V_O$ for the current stretch is higher than the optimal speed $V_O$ for the subsequent stretch, the last part of the current stretch is covered at a progressively decreasing speed to reach progressively the optimal speed $V_O$ for the subsequent stretch. Preferably, the deceleration is never violent, and, in the limits of possibility, it is not necessary to apply the brakes but only use an inertial motion of the automobile 1 so as not to dissipate the kinetic energy possessed by the automobile 1. In other words, in deceleration the automobile 1 is allowed to advance by inertia with the engine 4 cut off (i.e., driven by the rear driving wheels 3 without fuel injection and hence without fuel consumption) starting from a distance from the start of the subsequent stretch such as to allow the automobile 1 to reach the start of the subsequent stretch at the desired speed. It is clear that the deceleration of the automobile 1 is always a function of the desire of the driver, which is expressed through the coefficient $k_D$ of dynamic saving; when the coefficient $k_D$ of dynamic saving expresses a high attention to the reduction of fuel consumption, the deceleration may be made even with the engine turned off and the gear in neutral so as not to disperse energy in pumping of the cylinders and in friction of the engine 4 and of the transmission 5. However, turning-off of the engine 4 limits the possible use of the brakes when the braking system uses a servo brake actuated directly by the engine 4 (generally the vacuum tank of a standard servo brake has a capacity for approximately three applications of the brakes); in this case, the control unit 12 must evaluate whether it is possible to turn off the engine 4 in conditions of safety, i.e., whether the path envisages (even potentially) many applications of the brake, as for example happens in the presence of negative slopes, a series of bends, or intense traffic. A solution to this problem is the use of a servo brake actuated by an electric motor that is supplied by the battery of the automobile 1 and hence does not depend directly upon the engine 4 for its operation. The navigator 13 is in any case able to supply to the control unit 12 information regarding the presence of slopes, bends, crossroads, etc., hence putting the control unit 12 into conditions of sending commands for turning off the engine 4 and engaging the neutral only when said operation presents a high degree of safety.

In the design stage, a law of inertial motion is determined that, in conditions of cut-off or in conditions of engine 4 turned off and neutral gear and starting from a given starting speed, yields the evolution of the speed of the automobile 1 as a function of the distance covered, all this being determined also as a function of the slope (whether positive or negative), considering that this information can be estimated by the control unit 12 or transmitted by the navigator 13. This law of inertial motion can be expressed by means of a mathematical function containing parameters determined experimentally or else can be expressed by means of an experimental table. Using the law of inertial motion determined in the design stage and knowing the initial speed (optimal speed $V_O$ for the current stretch) and the final speed (optimal speed $V_O$ for the subsequent stretch) the control unit 12 determines, also according to the slope, the space required for the automobile 1 to slow down to reach the final speed (optimal speed $V_O$ for the subsequent stretch) starting from the initial speed (optimal speed $V_O$ for the current stretch); hence, when the automobile 1 is at a distance equal to the space for slowing down from the start of the subsequent stretch, the control unit 12 turns off the engine 4 (i.e., it sets the engine 4 in conditions of cut-off and possibly disconnected from the rear driving wheels 3 as a function of the coefficient $k_D$ of dynamic saving) to proceed with an inertial motion up to the start of the subsequent stretch.

When the coefficient $k_D$ of dynamic saving favours the reduction in the travel time, the control unit 12 can also envisage using the brakes in the proximity of the start of the subsequent stretch; the intervention of the brakes will be all the more important, the more the coefficient $k_D$ of dynamic saving favours the reduction of the travel time.

It should be noted that what has been set forth above applies to a traditional braking system in which the kinetic energy of the automobile 1 is entirely dissipated in the form of heat; in the case where the automobile 1 is also provided with a regenerative braking system (which is much less penalizing from the energy standpoint), for example equipped with a reversible electric machine that can function as electric generator, the control unit 12 can program a much more extensive use of the regenerative braking system itself. In this case, from the points of view of energy and travelling comfort, particularly rewarding is the use of the regenerative braking system combined with turning-off of the engine 4 and engagement of the neutral.

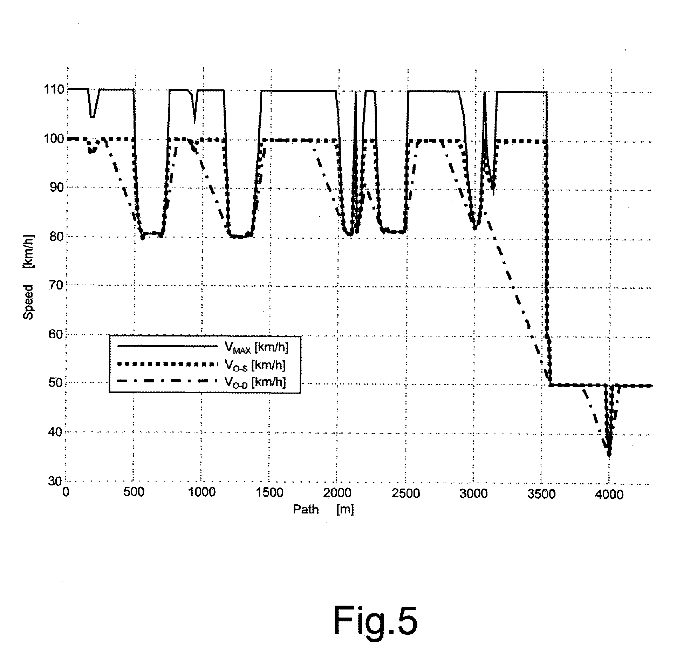

Figure 5 is a graphic illustration a real example of a profile of the recommended maximum speed $V_{MAX}$ (solid line), optimal speed $V_{O-S}$ in static conditions (dashed line), i.e., without application of the rule of adjustment of the speed described above, and optimal speed $V_{O-D}$ in dynamic conditions (dashed-and-dotted line), i.e., with application of the rule of adjustment of the speed of the automobile 1 described above, along a testing path of approximately 4 km using a coefficient $k_S$ of static saving equal to 0.85 (hence a coefficient $k_S$ of static saving that slightly favours the reduction of fuel consumption over the reduction of the travel time) and using a coefficient $k_D$ of dynamic saving that leads to the engine 4 being turned off during deceleration without, however, disconnecting the engine 4 from the rear driving wheels 3.

It should be noted that, if information regarding the subsequent stretch of the path of the automobile 1 is not available, but only information on the current stretch along which the automobile 1 is travelling is available, the control unit 12 is not able to determine the optimal speed $V_O$ in dynamic conditions, but is able to determine only the optimal speed $V_O$ in static conditions.

As mentioned previously, the control unit 12 could receive in real time the information supplied by the acquisition device 14 regarding the limits imposed by the variable road signals (typically traffic lights) in front of the automobile 1; in response to particular constraints imposed by the variable road signals, the control unit 12 temporarily modifies the optimal speed $V_O$ to take into account said constraints in an efficient and effective way. For example, if a red traffic light is detected, the control unit 12 sets the engine 4 in cut-off (or turns off the engine 4 with gear in neutral) to be able to reach the traffic light gradually, minimizing fuel consumption.

In the case of "speaking" traffic lights, the dialogue via radio between the acquisition device 14 and the control unit of the "speaking" traffic lights enables acquisition both of the current state of the traffic lights and of the time that remains before the subsequent change of state; in this case, knowing the distance from the traffic lights, the state of the traffic lights, and the time that remains before the subsequent change of state, the control unit 12 can determine the most efficient law of motion to pass through the crossroads regulated by the traffic lights. For example, if the traffic lights are on green, the control unit 12 evaluates whether it is possible to pass through the crossroads regulated by the traffic lights in conditions of safety (possibly also by accelerating the automobile 1 up to the recommended maximum speed $V_{MAX}$ for the current stretch) or else whether it is necessary to slow down and then to stop the automobile 1 in front of the red traffic light. In the latter case, generally the control unit 12 sets the engine 4 in cut-off (or turns off the engine 4 with gear in neutral) to be able to reach the traffic light gradually, thus minimizing the fuel consumption. Instead, if the traffic light is on red, the control unit 12, knowing the time to wait for the green and the distance from the traffic lights, determines the law of motion for the traffics light just after it has changed state from red to green.

As mentioned previously, the control unit 12 could receive in real time from a system of video cameras and/or radars the information regarding the presence on the path of the vehicle 1 of other vehicles and information regarding their speed. All this can be useful not only for requirements of safety, but also for reducing fuel consumption since it is possible in time to reduce the speed and hence the torque generated by the engine to avoid any subsequent jamming-on of the brakes. In other words, the control unit 12 receives in real time information on the presence along the path of the vehicle 1 of other vehicles or other objects and of their speed, determines any potential interference (bumping) with other vehicles or other objects along the path of the vehicle if it advances at the current optimal speed $V_O$, and decreases temporarily and progressively the optimal speed $V_O$ to slow down the vehicle 1 temporarily so as to prevent any interference with other vehicles or other objects along the path of the vehicle 1.

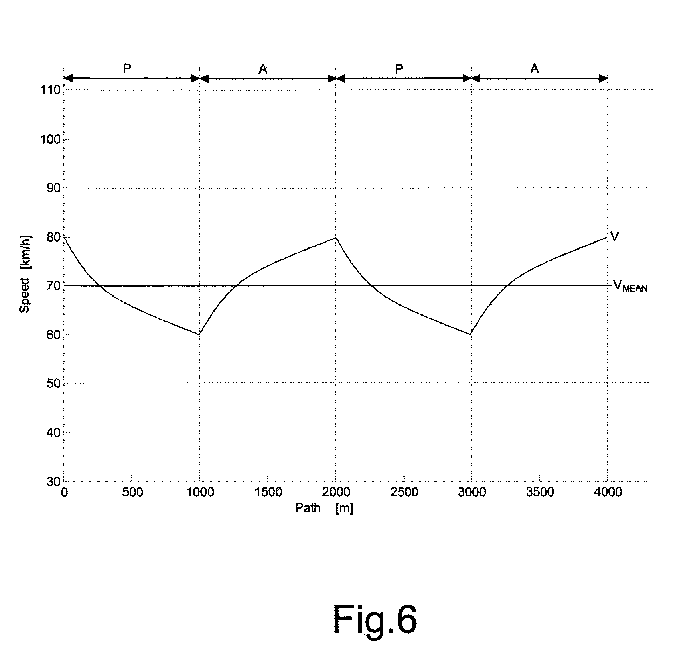

According to a possible embodiment illustrated in Figure 6, during the design stage it is determined whether in the case of long stretches to be traversed at a constant speed (typically, but not only, stretches of motorway) it is more advantageous from an energy standpoint (i.e., for reducing fuel consumption) to proceed at constant speed or else to alternate cyclically a phase of active motion (designated by the letter "A" in Figure 6), in which the engine 4 is turned on and is connected to the rear driving wheels 3 through the gearchange 9, and a phase of passive motion or motion by inertia (designated by the letter "B" in Figure 6), in which the engine 4 is turned off and is disconnected from the rear driving wheels 3 by setting the gearchange 9 in neutral. As a function of the characteristics of the automobile 1 and of the engine 4 and of the average speed that it is intended to maintain, the constant speed can be energetically less advantageous (i.e., it may present higher consumption levels) than the speed that alternates cyclically phases of active motion and passive motion in so far as in phases of active motion the engine 4 can be made to work in conditions of maximum efficiency.

As mentioned previously, preferably the simulations on the behaviour of the vehicle 1 for determining the type of optimal motion are not made each time by the control unit 12, but are made during the design stage, and the results of the simulations are stored in a memory of the control unit 12. In other words, in a memory of the control unit 12 a table is present, which, as a function of the desired average speed, yields whether it is more advantageous from the energy standpoint to proceed at a constant speed or else whether it is more advantageous from the energy standpoint to proceed by alternating cyclically a phase of active motion and a phase of passive motion; moreover, when it is more advantageous from the energy standpoint to proceed by alternating cyclically a phase of active motion and a phase of passive motion, the table also yields the ideal ratio between the duration of the phase of active motion and the duration of the phase of passive motion.

In practice, once the control unit 12 has determined the current optimal speed $V_O$ and has verified that the current optimal speed $V_O$ must be maintained for a sufficiently long time, i.e., that the current stretch of the path of the automobile 1 is sufficiently long (hence greater than a predetermined threshold value), the control unit 12 verifies whether it is more advantageous from the energy standpoint to proceed at a constant speed equal to the current optimal speed $V_O$ or else whether it is more advantageous from the energy standpoint to proceed by alternating cyclically a phase of active motion and a phase of passive motion so as to obtain an average speed equal to the current optimal speed $V_O$, and obviously uses the modes that are most advantageous from the energy standpoint.

As illustrated in Figure 6, during the phase of active motion the vehicle 1 has an accelerated motion, during which the instantaneous speed (designated by the letter V in Figure 6) is progressively increasing until it reaches a maximum value that is higher than the current optimal speed $V_O$ and is equal to the average speed $V_{MEAN}$, whereas, during the phase of passive motion, the vehicle 1 presents a decelerated motion in which the instantaneous speed is progressively decreasing until it reaches a minimum value lower than the current optimal speed $V_O$. In other words, the instantaneous speed oscillates cyclically about the current optimal speed $V_O$, which is equal to the average speed $V_{MEAN}$.

The mode of operation described above, in which the vehicle cyclically alternates a phase of active motion (in which the engine 4 is turned on and is connected to the rear driving wheels 3 through the gearchange 9) and a phase of passive motion or motion by inertia (in which the engine 4 is turned off and is disconnected from the rear driving wheels 3), can be used also independently of the determination of the recommended maximum speed $V_{MAX}$ and of the subsequent determination of the optimal speed $V_O$. In other words, the driver who is about to embark upon a sufficiently long stretch that can potentially be travelled along at a constant speed (typically, but not only, a stretch of motorway), communicates to the control unit 12 the desired average speed that it is intended to maintain by means of the interface device 15 and leaves to the control unit 12 the task of "implementing" said desired average speed in the most economic advantageous way possible. Maintaining the requirement of obtaining the desired average speed, the control unit 12 decides whether it is more advantageous from the energy standpoint to proceed at a constant speed equal to the desired average speed or else whether it is more advantageous from the energy standpoint to proceed by alternating cyclically a phase of active motion and a phase of passive motion. In addition, once it has been established that it is more advantageous to proceed by alternating cyclically a phase of active motion and a phase of passive motion, the control unit 12 establishes the ideal ratio between the duration of the phase of active motion and the duration of the phase passive motion.

It should be noted that the optimal speed $V_O$ determined by the control unit 12 can be directly implemented by the control unit 12 itself, or else may only be recommended to the driver by means of a purposely provided visual and/or acoustic warning issued by the interface device 15. When the optimal speed $V_O$ determined by the control unit 12 is only recommended to the driver by means of a purposely provided visual and/or acoustic warning, the interface device 15 could also display an estimate of the variation of the fuel consumption (and possibly also an estimate of the variation of the travel time) if one were to proceed at the optimal speed $V_O$ instead of at the current speed.

As has been mentioned previously, the optimal speed $V_O$ determined by the control unit 12 can be directly implemented by the control unit 12 itself, or else may only be recommended to the driver, to whom the complete control of the accelerator is left; also in the former case the driver must anyway be able immediately to take over full control of the vehicle 1 freeing himself from the control of tracking of the speed performed by the control unit 12, for example by acting also slightly on the brake pedal. Once the driver wants the control unit 12 to resume control, this must be possible with the same ease, without the driver himself having to make an explicit request. Two different cases may thus arise: in the first, the driver accelerates with respect to the optimal speed $V_O$, for example to overtake, in which case it is sufficient to release the accelerator pedal to enable the control unit 12 to resume control gradually; in the second case, instead, the driver brakes, and then the control unit 12 will resume tracking of the optimal speed $V_O$ if and only if it is the driver himself who brings the vehicle 1 for a calibratable time into the neighbourhood of the same optimal speed $V_O$.

In addition, it is possible to carry out a sort of self-evaluation of the style of driving of the driver at the end of the journey: at the end of the journey the driver may perform downloading of the data on the journey that has just terminated (typically via USB port or the like) and, by means of a purposely provided program implemented in a personal computer, may verify his own style of driving (for example, by superimposing the path covered on a map to be able to have a point-by-point indication of the various recommendations); the result of the procedure ought to be a sort of indicator of efficiency or of amount of fuel saved or that it would have been possible to save in the case where the driver had managed to follow all the recommendations supplied to him by the control unit 12.

The speed-control method has been described above presents numerous advantages in so far as it enables reduction of the fuel consumption and of the pollutants produced, without at the same time inflicting an excessive penalization on the travel time. In particular, an extremely important aspect of the speed-control method described above is the possibility of concentrating one's action in the points of the path with highest density of advantages and hence determining an effective reduction of consumption, without intervening in a way that is excessive and troublesome for the driver. Furthermore, the functionality of the speed-control method described above can be easily regulated by the driver by acting in a simple and intuitive way on the coefficients $k_S$ and $k_D$ of static and dynamic saving. Finally, the speed-control method described above is simple and inexpensive to implement even on an existing vehicle of up-to-date design in so far as it does not require installation of physical components additional to the ones already normally present.

**Claims**

1. A method for controlling the speed of a vehicle (1), the control method comprising the steps of:

   determining a current stretch of a path of the vehicle (1);
   determining a recommended maximum speed ($V_{MAX}$) for the current stretch of the path of the vehicle (1); and
   determining an optimal speed ($V_O$) for the current stretch of the path of the vehicle (1) as a function of the corresponding recommended maximum speed ($V_{MAX}$) ;
   the control method being **characterized in that** it comprises the further steps of:
   determining at least one coefficient ($k_S$) of static saving, which is variable in so far as it depends upon the wishes of the driver, and indicates to what extent the saving on the travel time must prevail over the energy saving; and
   determining the optimal speed ($V_O$) for the current stretch of the path of the vehicle (1) as a function of the corresponding recommended maximum speed ($V_{MAX}$) and of the coefficient ($k_S$) of static saving that indicates to what extent the saving on the travel time must prevail over the energy saving.

2. The control method according to Claim 1 and comprising the further steps of:

   defining, in the design stage, a cost function ($F_C$) that is variable as a function of the coefficient ($k_S$) of static saving and, given a certain recommended maximum speed ($V_{MAX}$) and a speed (V) lower than the recommended maximum speed ($V_{MAX}$), yields an overall "cost" of the reduction of the speed from the recommended maximum speed ($V_{MAX}$) to the speed (V); and
   determining, in the design stage, for each recommended maximum speed ($V_{MAX}$) and for each coefficient ($k_S$) of static saving, the speed (V) that is lower than or equal to the recommended maximum speed ($V_{MAX}$), which minimizes the cost function ($F_C$) and constitutes the corresponding optimal speed ($V_O$).

3. The control method according to Claim 2 and comprising the further steps of:

   calculating the cost function ($F_C$) by adding algebraically to the percentage variation in consumption ($\Delta C\%$) obtained from the reduction of the speed the percentage variation of the travel time ($\Delta T\%$) obtained from the reduction of the speed; and
   entering within the cost function ($F_C$) the coefficient ($k_S$) of static saving that varies the weight of the percentage variation in the consumption levels ($\Delta C\%$) with respect to the percentage variation of the travel time ($\Delta T\%$).

4. The control method according to Claim 3, wherein the cost function ($F_C$) is expressed by one of the following equations:

$$F_C(V,\ V_{MAX}) = \frac{T(V) - T(V_{MAX})}{T(V_{MAX})} \cdot k_S + \frac{C(V) - C(V_{MAX})}{C(V_{MAX})}$$

$$F_C(V,\ V_{MAX}) = \frac{T(V) - T(V_{MAX})}{T(V_{MAX})} \cdot \left(1 - k_S\right) + \frac{C(V) - C(V_{MAX})}{C(V_{MAX})} \cdot k_S$$

where:

F_C is the cost function;
V is the speed of the vehicle (1);
$V_{MAX}$ is the recommended maximum speed of the vehicle (1);
T(V) is the function that yields the travel time of the vehicle (1) at the speed (V);
$k_S$ is the coefficient of static saving;
C(V) is the function that yields the fuel consumption of the vehicle (1) at the speed (V).

5. The control method according to Claim 2, Claim 3, or Claim 4, wherein the cost function ($F_C$) is calculated for the covering of a reference stretch of standard and predefined length.

6. The control method according to any one of Claims 1 to 5 and comprising the further steps of:

determining at least one subsequent stretch of the path of the vehicle (1) ;
determining a recommended maximum speed ($V_{MAX}$) for the subsequent stretch of the path of the vehicle (1);
determining an optimal speed ($V_O$) for the subsequent stretch of the path of the vehicle (1) as a function of the corresponding recommended maximum speed ($V_{MAX}$) and of the coefficient ($k_S$) of static saving; and
providing, in a neighbourhood of the boundary between the current stretch and the subsequent stretch, an adequate transition of the speed of the vehicle (1) from the optimal speed ($V_O$) for the current stretch to the optimal speed ($V_O$) for the subsequent stretch.

7. The control method according to Claim 6, wherein the adjustment of the speed of the vehicle (1) occurs entirely in the subsequent stretch when the optimal speed ($V_O$) for the current stretch is lower than the optimal speed ($V_O$) for the subsequent stretch, and the adjustment of the speed of the vehicle (1) occurs entirely in the current stretch when the optimal speed ($V_O$) for the current stretch is higher than the optimal speed ($V_O$) for the subsequent stretch.

8. The control method according to Claim 7 and comprising the further steps of:

traversing, when the optimal speed ($V_O$) for the current stretch is lower than the optimal speed ($V_O$) for the subsequent stretch, the entire current stretch at its own optimal speed ($V_O$) ;
performing, when the optimal speed ($V_O$) for the current stretch is lower than the optimal speed ($V_O$) for the subsequent stretch, a progressive acceleration to reach progressively the optimal speed ($V_O$) for the subsequent stretch in an initial portion of the subsequent stretch; and
traversing, when the optimal speed ($V_O$) for the current stretch is higher than the optimal speed ($V_O$) for the subsequent stretch, a last part of the current stretch at a progressively decreasing speed to reach progressively the optimal speed ($V_O$) for the subsequent stretch.

9. The control method according to Claim 8 and comprising the further steps of:

determining at least one coefficient ($k_D$) of dynamic saving, which is variable and depends upon the wishes of the driver; and
determining the mean value of the acceleration during the adjustment of speed as a function of the coefficient ($k_D$) of dynamic saving in such a way that the more the coefficient ($k_D$) of dynamic saving favours the reduction of consumption, the more the mean value of the acceleration is reduced.

10. The control method according to Claim 8 or Claim 9 and comprising the further steps of:

using, within the limits of possibility, only a motion by inertia of the vehicle (1) to make the deceleration so as not to dissipate the kinetic energy possessed by the vehicle (1) itself; and
letting the vehicle (1) advance in deceleration by inertia starting from a distance from the start of the subsequent stretch such as to allow the vehicle (1) to arrive at the start of the subsequent stretch at the desired speed.

11. The control method according to Claim 10 and comprising the further step of:

establishing the amount of entry into action of the dissipative braking system as a function of the coefficient ($k_D$) of dynamic saving.

**12.** The control method according to Claim 10 or Claim 11 and comprising the further steps of:

determining the space necessary for the vehicle to slow down (1) to reach the optimal speed ($V_O$) for the subsequent stretch starting from the optimal speed ($V_O$) for the current stretch and as a function of a slope; and turning off the engine (4) to proceed with an inertial motion up to the start of the subsequent stretch when the vehicle (1) is at a distance from the start of the subsequent stretch equal to the space for slowing down.

**13.** The control method according to any one of Claims 1 to 12 and comprising the further steps of:

determining for the current optimal speed ($V_O$) whether, in the case of a long stretch to be traversed at a constant speed, it is more advantageous from an energy standpoint to proceed at a constant speed equal to the current optimal speed ($V_O$) or else alternate cyclically a phase of active motion, in which the engine (4) is turned on and is connected to the driving wheels (3), and a phase of passive motion, in which the engine (4) is turned off and is disconnected from the driving wheels (3) so as to obtain an average speed equal to the current optimal speed ($V_O$) ; and actuating, in the case of long stretches to be traversed at a constant speed, the type of motion that is most advantageous from an energy standpoint so as to obtain an average speed equal to the current optimal speed ($V_O$).

**14.** The control method according to any one of Claims 1 to 13 and comprising the further steps of:

recommending to the driver the optimal speed ($V_O$) by means of a purposely provided visual and/or acoustic warning; and displaying an estimate of the variation of the fuel consumption and/or an estimate of the variation of the travel time if one were to proceed at the optimal speed ($V_O$) instead of at the current speed.

**15.** The control method according to any one of Claims 1 to 14 and comprising the further steps of:

receiving in real time information on the presence on the path of the vehicle (1) of other vehicles or other objects and on their speed; determining any potential interference with other vehicles or other objects along the path of the vehicle (1) when advancing at the current optimal speed ($V_O$); and temporarily and progressively reducing the optimal speed ($V_O$) to slow down the vehicle (1) temporarily so as to prevent any interference with other vehicles or other objects along the path of the vehicle (1).

**Patentansprüche**

**1.** Verfahren zum Steuern der Geschwindigkeit eines Fahrzeugs (1), wobei das Steuerverfahren die folgenden Schritte umfasst:

Bestimmen einer momentanen Strecke eines Wegs des Fahrzeugs (1); Bestimmen einer empfohlenen Maximalgeschwindigkeit ($V_{MAX}$) für die momentane Strecke des Wegs des Fahrzeugs (1); und Bestimmen einer optimalen Geschwindigkeit ($V_0$) für die momentane Strecke des Wegs des Fahrzeugs (1) als Funktion der entsprechenden empfohlenen Maximalgeschwindigkeit ($V_{MAX}$); wobei das Steuerverfahren **dadurch gekennzeichnet ist, dass** es die folgenden weiteren Schritte umfasst: Bestimmen wenigstens eines Koeffizienten ($k_S$) des statischen Vorteils, der insofern variabel ist, als er von den Wünschen des Fahrers abhängt, und angibt, in welchem Ausmaß der Vorteil hinsichtlich der Fahrzeit gegenüber dem Energievorteil überwiegen muss; und Bestimmen der optimalen Geschwindigkeit ($V_0$) für die momentane Strecke des Wegs des Fahrzeugs (1) als Funktion der entsprechenden empfohlenen Maximalgeschwindigkeit ($V_{MAX}$) und des Koeffizienten ($k_S$) des statischen Vorteils, der angibt, in welchem Ausmaß der Vorteil bezüglich der Fahrzeit gegenüber dem Energievorteil überwiegen muss.

**2.** Steuerverfahren nach Anspruch 1, das die folgenden weiteren Schritte umfasst:

auf der Entwurfsstufe Definieren einer Kostenfunktion ($F_C$), die sich als Funktion des Koeffizienten ($k_S$) des statischen Vorteils ändert und bei einer gegebenen bestimmten empfohlenen Maximalgeschwindigkeit ($V_{MAX}$) und einer Geschwindigkeit (V), die niedriger als die empfohlene Maximalgeschwindigkeit ($V_{MAX}$) ist, die Gesamt-"Kosten" der Verringerung der Geschwindigkeit gegenüber der empfohlenen Maximalgeschwindigkeit ($V_{MAX}$) auf die Geschwindigkeit (V) liefert; und

auf der Entwurfsstufe Bestimmen für jede empfohlene Maximalgeschwindigkeit ($V_{MAX}$) und für jeden Koeffizienten ($k_S$) des statischen Vorteils der Geschwindigkeit (V), die kleiner oder gleich der empfohlenen Maximalgeschwindigkeit ($V_{MAX}$) ist, die die Kostenfunktion ($F_C$) minimal macht und die entsprechende optimale Geschwindigkeit ($V_0$) bildet.

3. Steuerverfahren nach Anspruch 2, das die folgenden weiteren Schritte umfasst:

Berechnen der Kostenfunktion ($F_C$) durch algebraisches Addieren der prozentualen Veränderung der Fahrzeit ($\Delta T\%$), die aus der Verringerung der Geschwindigkeit erhalten wird, zu der prozentualen Veränderung des Verbrauchs ($\Delta C\%$), die aus der Verringerung der Geschwindigkeit erhalten wird; und

Eingeben des Koeffizienten ($k_S$) des statischen Vorteils in die Kostenfunktion ($F_C$), der das Gewicht der prozentualen Veränderung der Verbrauchsniveaus ($\Delta C\%$) in Bezug auf die prozentuale Veränderung der Fahrzeit ($\Delta\%$) verändert.

4. Steuerverfahren nach Anspruch 3, wobei die Kostenfunktion ($F_C$) durch eine der folgenden Gleichungen gegeben ist:

$$F_C\left(V, V_{MAX}\right) = \frac{T\left(V\right) - T\left(V_{MAX}\right)}{T\left(V_{MAX}\right)} \cdot k_S + \frac{C\left(V\right) - C\left(V_{MAX}\right)}{C\left(V_{MAX}\right)}$$

$$F_C\left(V, V_{MAX}\right) = \frac{T\left(V\right) - T\left(V_{MAX}\right)}{T\left(V_{MAX}\right)} \cdot \left(1 - k_S\right) + \frac{C\left(V\right) - C\left(V_{MAX}\right)}{C\left(V_{MAX}\right)} \cdot k_S$$

wobei:

$F_C$ die Kostenfunktion ist;
V die Geschwindigkeit des Fahrzeugs (1) ist;
$V_{MAX}$ die empfohlene Maximalgeschwindigkeit des Fahrzeugs (1) ist;
T(V) die Funktion ist, die die Fahrzeit des Fahrzeugs (1) bei der Geschwindigkeit (V) liefert;
$k_S$ der Koeffizient des statischen Vorteils ist;
C(V) die Funktion ist, die den Kraftstoffverbrauch des Fahrzeugs (1) bei der Geschwindigkeit (V) liefert.

5. Steuerverfahren nach Anspruch 2, Anspruch 3 oder Anspruch 4, wobei die Kostenfunktion ($F_C$) für die Abdeckung einer Bezugsstrecke mit im Voraus definierter Standardlänge berechnet wird.

6. Steuerverfahren nach einem der Ansprüche 1 bis 5, das die folgenden weiteren Schritte umfasst:

Bestimmen wenigstens einer nachfolgenden Strecke des Wegs des Fahrzeugs (1);
Bestimmen einer empfohlene Maximalgeschwindigkeit ($V_{MAX}$) für die nachfolgende Strecke des Wegs des Fahrzeugs (1);
Bestimmen einer optimalen Geschwindigkeit ($V_0$) für die nachfolgende Strecke des Wegs des Fahrzeugs (1) als Funktion der entsprechenden empfohlenen Maximalgeschwindigkeit ($V_{MAX}$) und des Koeffizienten ($k_S$) des statischen Vorteils; und
Schaffen in einer Umgebung der Grenze zwischen der momentanen Strecke und der nachfolgenden Strecke eines geeigneten Übergangs der Geschwindigkeit des Fahrzeugs (1) von der optimalen Geschwindigkeit ($V_0$) für die momentane Strecke zu der optimalen Strecke ($V_0$) für die nachfolgende Strecke.

7. Steuerverfahren nach Anspruch 6, wobei die Einstellung der Geschwindigkeit des Fahrzeugs (1) vollständig auf der nachfolgenden Strecke erfolgt, wenn die optimale Geschwindigkeit ($V_0$) für die momentane Strecke niedriger ist als

die optimale Geschwindigkeit ($V_0$) für die nachfolgende Strecke, und die Einstellung der Geschwindigkeit des Fahrzeugs (1) vollständig auf der momentanen Strecke erfolgt, wenn die optimale Geschwindigkeit ($V_0$) für die momentane Strecke höher ist als die optimale Geschwindigkeit ($V_0$) für die nachfolgende Strecke.

8. Steuerverfahren nach Anspruch 7, das die folgenden weiteren Schritte umfasst:

Durchqueren der gesamten momentanen Strecke mit der ihr eigenen optimalen Geschwindigkeit ($V_0$), wenn die optimale Geschwindigkeit ($V_0$) für die momentane Strecke niedriger ist als die optimale Geschwindigkeit ($V_0$) für die nachfolgende Strecke;

wenn die optimale Geschwindigkeit ($V_0$) für die momentane Strecke niedriger ist als die optimale Geschwindigkeit ($V_0$) für die nachfolgende Strecke, Ausführen einer allmählichen Beschleunigung, um die optimale Geschwindigkeit ($V_0$) für die nachfolgende Strecke in einem anfänglichen Abschnitt der nachfolgenden Strecke allmählich zu erreichen; und

Durchqueren wenigstens eines letzten Teils der momentanen Strecke mit einer allmählich abnehmenden Geschwindigkeit, um die optimale Geschwindigkeit ($V_0$) für die nachfolgende Strecke allmählich zu erreichen, wenn die optimale Geschwindigkeit ($V_0$) für die momentane Strecke höher ist als die optimale Strecke ($V_0$) für die nachfolgende Strecke.

9. Steuerverfahren nach Anspruch 8, das die folgenden weiteren Schritte umfasst:

Bestimmen wenigstens eines Koeffizienten ($k_D$) eines dynamischen Vorteils, der variabel ist und von den Wünschen des Fahrers abhängt; und

Bestimmen des Mittelwerts der Beschleunigung während der Einstellung der Geschwindigkeit als Funktion des Koeffizienten ($k_D$) des dynamischen Vorteils in der Weise, dass der Mittelwert der Beschleunigung umso stärker verringert wird, je stärker der Koeffizient ($k_D$) des dynamischen Vorteils den Kraftstoffverbrauch verringert.

10. Steuerverfahren nach Anspruch 8 oder Anspruch 9, das die folgenden weiteren Schritte umfasst:

innerhalb der möglichen Grenzen Verwenden lediglich einer Trägheitsbewegung des Fahrzeugs (1), um die Verzögerung vorzunehmen, um keine kinetische Energie des Fahrzeugs (1) selbst in Wärme zu überführen; und

Zulassen, dass sich das Fahrzeug (1) während der Verzögerung aufgrund seiner Trägheit vorwärts bewegt, wobei in einem Abstand vor dem Beginn der nachfolgenden Strecke begonnen wird, um zu ermöglichen, dass das Fahrzeug (1) am Beginn der nachfolgenden Strecke die gewünschte Geschwindigkeit erreicht.

11. Steuerverfahren nach Anspruch 10, das den folgenden weiteren Schritt umfasst:

Erzeugen des Eingabebetrags für die Betätigung des dissipativen Bremssystems als Funktion des Koeffizienten ($k_D$) des dynamischen Vorteils.

12. Steuerverfahren nach Anspruch 10 oder Anspruch 11, das die folgenden weiteren Schritte umfasst:

Bestimmen des Raums, den das Fahrzeug (1) benötigt, um langsamer zu werden, um die optimale Geschwindigkeit ($V_0$) für die nachfolgende Strecke zu erreichen, wobei bei der optimalen Geschwindigkeit ($V_0$) für die momentane Strecke begonnen wird, und als Funktion eines Gefälles; und

Abschalten der Maschine (4), um bis zum Beginn der nachfolgenden Strecke durch Trägheit fortzufahren, wenn sich das Fahrzeug (1) in einem Abstand vor dem Beginn der nachfolgenden Strecke befindet, der gleich dem Raum für die Verlangsamung ist.

13. Steuerverfahren nach einem der Ansprüche 1 bis 12, das die folgenden weiteren Schritte umfasst:

für die momentane optimale Geschwindigkeit ($V_0$) Bestimmen, ob es im Fall einer langen Strecke, die mit konstanter Geschwindigkeit durchquert werden soll, vom Energiestandpunkt aus vorteilhafter ist, mit einer konstanten Geschwindigkeit weiter zu fahren, die gleich der momentanen optimalen Geschwindigkeit ($V_0$) ist, oder ob eine Phase der aktiven Bewegung, in der die Maschine (4) eingeschaltet und mit den Antriebsrädern (3) verbunden wird, und eine Phase der passiven Bewegung, in der die Maschine (4) abgeschaltet ist und von den Antriebsrädern (3) getrennt ist, zyklisch abwechseln sollten, um so eine Durchschnittsgeschwindigkeit zu erhalten, die gleich der momentanen optimalen Geschwindigkeit ($V_0$) ist; und

in dem Fall, in dem lange Strecken mit einer konstanten Geschwindigkeit durchquert werden sollen, Betätigen desjenigen Bewegungstyps, der vom Energiestandpunkt aus am vorteilhaftesten ist, um eine Durchschnittsgeschwindigkeit zu erhalten, die gleich der momentanen optimalen Geschwindigkeit ($V_0$) ist.

14. Steuerverfahren nach einem der Ansprüche 1 bis 13, das die folgenden weiteren Schritte umfasst:

Angeben einer Empfehlung der optimalen Geschwindigkeit ($V_0$) für den Fahrer mittels einer zweckmäßig vorgesehenen visuellen und/oder akustischen Warnung; und
Anzeigen einer Schätzung der Veränderung des Kraftstoffverbrauchs und/oder einer Schätzung der Veränderung der Fahrzeit, falls statt mit der momentanen Geschwindigkeit mit der optimalen Geschwindigkeit ($V_0$) fortgefahren werden sollte.

15. Steuerverfahren nach einem der Ansprüche 1 bis 14, das die folgenden weiteren Schritte umfasst:

Empfangen in Echtzeit von Informationen bezüglich des Vorhandenseins und der Geschwindigkeit anderer Fahrzeuge und anderer Gegenstände auf dem Weg des Fahrzeugs (1);
Bestimmen jeglicher potentieller Störung mit anderen Fahrzeugen oder anderen Gegenständen auf dem Weg des Fahrzeugs (1), wenn eine Vorwärtsbewegung mit der momentanen optimalen Geschwindigkeit ($V_0$) erfolgt; und
vorübergehendes und allmähliches Verringern der optimalen Geschwindigkeit ($V_0$), um das Fahrzeug (1) vorübergehend zu verlangsamen, um jegliche Störung mit anderen Fahrzeugen oder anderen Gegenständen auf dem Weg des Fahrzeugs (1) zu verhindern.

## Revendications

1. Procédé pour commander la vitesse d'un véhicule (1), le procédé de commande comprenant les étapes consistant à :

déterminer un tronçon réel d'un trajet du véhicule (1) ;
déterminer une vitesse maximum recommandée ($V_{MAX}$) pour le tronçon actuel du trajet du véhicule (1) ; et à
déterminer une vitesse optimale ($V_O$) pour le tronçon actuel du trajet du véhicule (1) en tant que fonction de la vitesse maximum recommandée correspondante ($V_{MAX}$) ;
le procédé de commande étant **caractérisé en ce qu'**il comprend les étapes supplémentaires consistant à :
déterminer au moins un coefficient ($k_S$) d'économie statique, qui est variable en ce sens qu'il dépend des souhaits du conducteur et qui indique dans quelle mesure l'économie sur le temps de parcours doit prévaloir sur l'économie d'énergie ; et à
déterminer la vitesse optimale ($V_O$) pour le tronçon actuel du trajet du véhicule (1) en tant que fonction de la vitesse maximum recommandée ($V_{MAX}$) correspondante et du coefficient ($k_S$) d'économie statique qui indique dans quelle mesure l'économie sur le temps de parcours doit prévaloir sur l'économie d'énergie.

2. Procédé de commande selon la revendication 1 et comprenant les étapes supplémentaires consistant à :

définir, au stade de la conception, une fonction coût ($F_C$) qui est variable en tant que fonction du coefficient ($k_S$) d'économie statique et qui, pour une certaine vitesse maximum recommandée ($V_{MAX}$) et pour une vitesse ($V$) inférieure à la vitesse maximum recommandée ($V_{MAX}$), donne un « coût global » de la réduction de la vitesse depuis la vitesse maximum recommandée ($V_{MAX}$) vers la vitesse ($V$) ; et à
déterminer, au stade de la conception, pour chaque vitesse maximum recommandée ($V_{MAX}$) et pour chaque coefficient ($k_S$) d'économie statique, la vitesse ($V$) qui est inférieure ou égale à la vitesse maximum recommandée ($V_{MAX}$) et qui réduit à un minimum la fonction coût ($F_C$) et constitue la vitesse optimale ($V_O$) correspondante.

3. Procédé de commande selon la revendication 2 et comprenant les étapes supplémentaires consistant à :

calculer la fonction coût ($F_C$) en ajoutant algébriquement à la variation en pourcentage de la consommation ($\Delta C\%$) obtenue par la réduction de la vitesse la variation en pourcentage du temps de parcours ($\Delta T\%$) obtenue par la réduction de la vitesse ; et
intégrer dans la fonction coût ($F_C$) le coefficient ($k_S$) d'économie statique qui modifie le poids de la variation en pourcentage des niveaux de consommation ($\Delta C\%$) par rapport à la variation en pourcentage du temps de parcours ($\Delta T\%$).

4. Procédé de commande selon la revendication 3, dans lequel la fonction coût ($F_C$) est exprimée par l'une des équations suivantes :

$$F_C(V, V_{MAX}) = \frac{T(V) - T(V_{MAX})}{T(V_{MAX})} \cdot k_S + \frac{C(V) - C(V_{MAX})}{C(V_{MAX})}$$

$$F_C(V, V_{MAX}) = \frac{T(V) - T(V_{MAX})}{T(V_{MAX})} \cdot (1 - k_S) + \frac{C(V) - C(V_{MAX})}{C(V_{MAX})} \cdot k_S$$

où :

$F_C$ est la fonction coût ;
$V$ est la vitesse du véhicule (1) ;
$V_{MAX}$ est la vitesse maximum recommandée du véhicule (1) ;
$T(V)$ est la fonction qui donne le temps de parcours du véhicule (1) à la vitesse ($V$) ;
$k_S$ est le coefficient d'économie statique ;
$C(V)$ est la fonction qui donne la consommation de carburant du véhicule (1) à la vitesse ($V$).

5. Procédé de commande selon la revendication 2, la revendication 3 ou la revendication 4, dans lequel la fonction coût ($F_C$) est calculée pour couvrir un tronçon de référence d'une longueur standard et prédéfinie.

6. Procédé de commande selon l'une quelconque des revendications 1 à 5, et comprenant les étapes supplémentaires consistant à :

déterminer au moins un tronçon suivant du trajet du véhicule (1) ;
déterminer une vitesse maximum recommandée ($V_{MAX}$) pour le tronçon suivant du trajet du véhicule (1) ;
déterminer une vitesse optimale ($V_O$) pour le tronçon suivant du trajet du véhicule (1) en tant que fonction de la vitesse maximum recommandée ($V_{MAX}$) correspondante et du coefficient ($k_S$) d'économie statique ; et à
réaliser, dans le voisinage de la limite entre le tronçon actuel et le tronçon suivant, une transition adéquate de la vitesse du véhicule (1) de la vitesse optimale ($V_O$) pour le tronçon actuel à la vitesse optimale ($V_O$) pour le tronçon suivant.

7. Procédé de commande selon la revendication 6, dans lequel l'ajustement de la vitesse du véhicule (1) s'effectue entièrement dans le tronçon suivant lorsque la vitesse optimale ($V_O$) pour le tronçon actuel est inférieure à la vitesse optimale ($V_O$) pour le tronçon suivant, et l'ajustement de la vitesse du véhicule (1) s'effectue entièrement dans le tronçon actuel lorsque la vitesse optimale ($V_O$) pour le tronçon actuel est supérieure à la vitesse optimale ($V_O$) pour le tronçon suivant.

8. Procédé de commande selon la revendication 7 et comprenant les étapes supplémentaires consistant à :

parcourir, lorsque la vitesse optimale ($V_O$) pour le tronçon actuel est inférieure à la vitesse optimale ($V_O$) pour le tronçon suivant, la totalité du tronçon actuel à sa propre vitesse optimale ($V_O$) ;
réaliser, lorsque la vitesse optimale ($V_O$) pour le tronçon actuel est inférieure à la vitesse optimale ($V_O$) pour le tronçon suivant, une accélération progressive pour atteindre progressivement la vitesse optimale ($V_O$) pour le tronçon suivant dans une partie initiale du tronçon suivant ; et à
parcourir, lorsque la vitesse optimale ($V_O$) pour le tronçon actuel est supérieure à la vitesse optimale ($V_O$) pour le tronçon suivant, au moins une partie du tronçon actuel à une vitesse progressivement décroissante, pour atteindre progressivement la vitesse optimale ($V_O$) pour le tronçon suivant.

9. Procédé de commande selon la revendication 8 et comprenant les étapes supplémentaires consistant à :

déterminer au moins un coefficient ($k_D$) d'économie dynamique, qui est variable et qui dépend des souhaits du conducteur ; et à déterminer la valeur moyenne de l'accélération pendant l'ajustement de la vitesse en tant que fonction du coefficient ($k_D$) d'économie dynamique de telle manière que plus le coefficient ($k_D$) d'économie dynamique favorise la réduction de la consommation, plus la valeur moyenne de l'accélération est réduite.

**10.** Procédé de commande selon la revendication 8 ou la revendication 9 et comprenant les étapes supplémentaires consistant à :

utiliser, dans les limites des possibilités, uniquement un déplacement par inertie du véhicule (1) pour réaliser la décélération de manière à ne pas dissiper l'énergie cinétique possédée par le véhicule (1) lui-même ; et à laisser le véhicule (1) avancer en décélération par inertie à partir d'une distance du début du tronçon suivant qui est telle qu'elle permette au véhicule (1) d'arriver au début du tronçon suivant à la vitesse désirée.

**11.** Procédé de commande selon la revendication 10 et comprenant l'étape supplémentaire consistant à :

établir la quantité d'entrée en action du système de freinage dissipatif en tant que fonction du coefficient ($k_D$) d'économie dynamique.

**12.** Procédé de commande selon la revendication 10 ou la revendication 11 et comprenant les étapes supplémentaires consistant à :

déterminer l'espace nécessaire au véhicule pour ralentir (1) de manière à atteindre la vitesse optimale ($V_O$) pour le tronçon suivant en partant de la vitesse optimale ($V_O$) pour le tronçon actuel et en fonction d'une pente ; et à arrêter le moteur (4) pour avancer avec un mouvement d'inertie jusqu'au début du tronçon suivant lorsque le véhicule (1) est à une distance du début du tronçon suivant égale à l'espace demandé pour ralentir.

**13.** Procédé de commande selon l'une quelconque des revendications 1 à 12 et comprenant les étapes supplémentaires consistant à :

déterminer pour la vitesse optimale actuelle ($V_O$) si, dans le cas d'un long tronçon à parcourir à une vitesse constante, il est ou non plus avantageux,
du point de vue de l'énergie, d'avancer à une vitesse constante égale à la vitesse optimale actuelle ($V_O$) que d'alterner cycliquement une phase de mouvement actif, dans laquelle le moteur (4) est mis en marche et est relié aux roues motrices (3), et une phase de mouvement passif, dans laquelle le moteur (4) est arrêté et est désolidarisé des roues motrices (3) de manière à obtenir une vitesse moyenne égale à la vitesse optimale actuelle ($V_O$) ; et à
activer, dans le cas de longs tronçons à parcourir à une vitesse constante, le type de déplacement qui est le plus avantageux, du point de vue de l'énergie, de manière à obtenir une vitesse moyenne égale à la vitesse optimale actuelle ($V_O$).

**14.** Procédé de commande selon l'une quelconque des revendications 1 à 13 et comprenant les étapes supplémentaires consistant à :

recommander au conducteur la vitesse optimale ($V_O$) au moyen d'un avertissement visuel et/ou acoustique spécialement prévu ; et à afficher une estimation de la variation de la consommation de carburant et/ou une estimation de la variation du temps de parcours dans le cas où l'on avance à la vitesse optimale ($V_O$) au lieu d'avancer à la vitesse actuelle.

**15.** Procédé de commande selon une quelconque des revendications 1 à 14 et comprenant les étapes supplémentaires consistant à :

recevoir une information en temps réel concernant la présence sur le trajet du véhicule (1) d'autres véhicules ou d'autres objets et leur vitesse ;
déterminer toute collision potentielle avec d'autres véhicules ou d'autres objets sur le trajet du véhicule (1) lorsqu'il avance à la vitesse optimale actuelle ($V_O$) ; et à
réduire temporairement et progressivement la vitesse optimale ($V_0$) pour ralentir temporairement le véhicule (1) de manière à éviter toute collision avec d'autres véhicules ou d'autres objets sur le trajet du véhicule (1).

Fig.1

Fig.2

Fig.3

Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004068359 A1